# FASCICULE DE BREVET EUROPEEN

(11) **EP 1 946 818 B1**
(45) Date de publication et mention de la délivrance du brevet: **03.10.2012**
(21) Numéro de dépôt: 07301628.9
(22) Date de dépôt: 05.12.2007
(51) Int. Cl.: B01D 53/04, B01D 53/26, B01D 3/00

(54) **Procédé de transport d'un tronçon de colonne de distillation**
Verfahren zum Transport eines Destillationkolonnenabschnittes
Transport method of a distillation column section

(30) Priorité: 21.12.2006 FR 0655772
(43) Date de publication de la demande: 23.07.2008
(73) Titulaire: L'AIR LIQUIDE, Société Anonyme pour l'Etude et l'Exploitation des Procédés Georges Claude, 75007 Paris (FR)
(72) Inventeur: De Bussy, Francois, 75012, Paris (FR); Monereau, Christian, 75011, Paris (FR); Beauvois, Jean-Claude, 89100, Soucy (FR)
(74) Mandataire: Mercey, Fiona Susan

(56) Documents cités:
- WO-A-2004/074603
- GB-A- 2 348 378
- RU-C1- 2 153 926
- US-A- 3 349 920

## Description

La présente invention est relative à un procédé de transport d'un tronçon de colonne de distillation permettant de protéger des parties internes pendant les périodes de transport.

Les parties internes des colonnes à distiller sont évidemment bien adaptées aux conditions opératoires de la colonne en question mais peuvent être sensibles à un contact prolongé avec l'atmosphère ambiante. Les problèmes évoqués pouvant être dus aux constituants habituels (humidité, dioxyde de carbone, oxygène...) ou à des polluants secondaires tels qu'on peut trouver dans les zones industrielles (produits soufrés, oxydes d'azote...) ou par exemple en ambiance marine.

On peut citer l'oxydation de l'acier carbone en présence d'oxygène et d'humidité, la formation d'hydrogène dans les mêmes conditions et en présence de diverses impuretés à partir d'aluminium. On sait également qu'il faut éviter toute trace de NH₃ en présence de cuivre et que les catalyseurs sont empoisonnés par un grand nombre de constituants susceptibles de se trouver dans une atmosphère polluée ou marine ( composés soufrés, chlorés, NOx...).

Il existe donc un risque réel de pollution, de corrosion, de création de composés indésirables voire dangereux si on laisse exposé à l'air des équipements tels les colonnes à distiller, en particulier comportant des plateaux en aluminium ou en cuivre, susceptibles de voir leurs internes s'oxyder. Ce risque est surtout important pendant la fabrication, le stockage, le transport, le montage, c'est à dire lorsque ces colonnes ne sont pas encore installées sur leur site définitif, et reliées aux équipements amont et aval.

WO-A-2004/074603 décrit un procédé de transport d'une colonne de distillation comprenant des parties internes enfermées dans une enceinte.

Des solutions existent pour pallier ces problèmes. Ainsi, la fabrication peut s'effectuer en atelier à atmosphère contrôlée avec filtration de l'air. Pendant le stockage et le transport, la protection consiste à obturer les entrées et sorties de l'équipement, par exemple en installant des brides pleines au niveau des tuyauteries.

Lorsqu'il s'agit d'un tronçon d'une colonne fabriqué par morceaux par exemple à cause de ses dimensions trop importantes, il est courant de souder un rond temporaire à l'extrémité libre. C'est le cas pour certaine colonne à distiller dont la hauteur finale est de plusieurs dizaines de mètres. Cette obturation se rajoute alors au bouchage plus classique des diverses tuyauteries d'entrée/sortie de l'équipement comme décrit plus haut. Les fonds elliptiques ou hémisphériques devenant très onéreux, dès lors que leur diamètre augmente, Il est aussi coutumier de souder un simple disque de façon également temporaire pour sécuriser les équipements durant le stockage et le transport. Cette solution, moins onéreuse au départ, est difficilement extrapolable à de gros équipements.

On peut calculer en effet les efforts susceptibles d'être appliqués sur l'obturateur.

Les efforts s'exerçant sur le fond vont en effet provenir des différences de pression Interne/ externe. L'écart de pression peut venir des conditions climatiques via l'effet direct de la pression atmosphérique mais aussi des variations de température. Des variations de 20°C vont entraîner un écart de pression de l'ordre de 80 mbar. Un tronçon stocké en été dans un pays « froid » pourra être très largement sous vide en hiver. De telles dépressions ou surpressions ne sont pas supportables mécaniquement par de simples disques de tôle mince dès qu'il s'agit d'équipement de taille importante. Or, pour mémoire, Il est classique de stocker et transporter des tronçons de colonne à distiller de plus de 5 m de diamètre.

Lors d'un transport les différences d'altitude le long d'un trajet peuvent causer des effets analogues. Il peut être alors excessivement coûteux de prévoir des fonds elliptiques voire hémisphériques de ces diamètres ou des fonds plats très renforcés (à cause des limitations des matériels eux-mêmes, du coût de la main d'oeuvre, du surcoût du transport dû au poids et/ou dimensions additionnel(les).

La solution préconisée ici est effectivement d'obturer par exemple une virole cylindrique de gros diamètre par un disque de tôle mince ainsi que de boucher classiquement les tuyauteries d'entrée/sortie susceptibles de se trouver sur cet équipement mais de ménager une liaison volontaire entre le volume interne ainsi délimité et l'atmosphère. Ainsi les transferts gazeux possibles dans un sens ou dans l'autre permettent à tout moment d'équilibrer les pressions interne/externe. Ces échanges se faisant par un circuit bien défini, par exemple à travers une tuyauterie, il est possible de placer sur ce circuit un ou des pièges destinés à capter tout ou au moins la majorité des constituants atmosphériques indésirables compte tenu des matériaux ou produits se trouvant à l'intérieur de l'enceinte.

De cette façon, le système n'est pas étanche mais on contrôle les entrées d'air (dues aux variations de température et de pression) en créant volontairement au moins une fuite sur laquelle on place un épurateur.

Selon un objet de l'invention, il est prévu un procédé selon la revendication 1.

Selon d'autres objets de l'invention, il est prévu que:
- le(s) dispositif(s) piège(nt) un constituant compris dans le groupe suivant : eau, dioxyde de carbone, oxydes d'azote, acides, oxygène, produits alcalins, hydrocarbures ;
- la conduite est une tuyauterie de l'équipement ;
- l'axe principal du dispositif en usage est vertical ;
- le dispositif piège le constituant par réaction chimique et/ou piège physiquement le constituant.

On pourra ainsi utiliser un adsorbant ( charbon actif ou gel de silice) dopé chimiquement pour arrêter des traces de produits chlorés, de l'HCl.... Pour d'autres constituants présents en quantité plus importante, on utilisera l'effet d'adsorption/désorption.

II faut effectivement noter que les flux en circulation à travers le piège vont être d'une part alternés, d'autre part ponctuellement faibles.

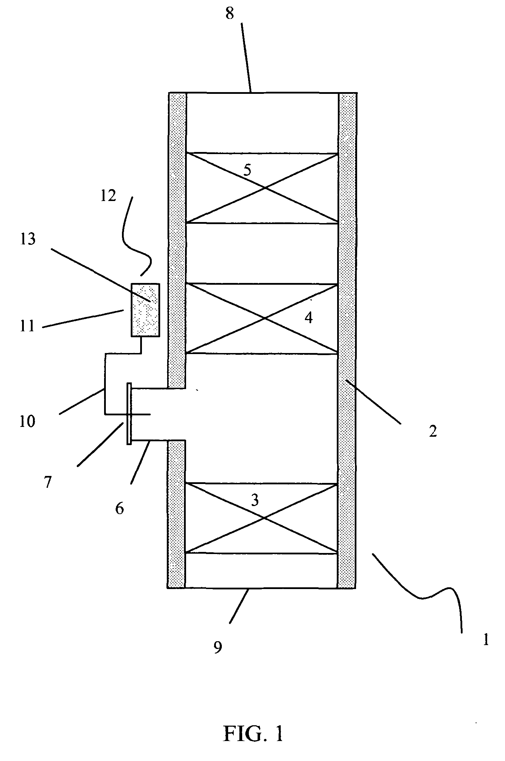

L'invention sera décrite en plus de détail en se référant à la figure qui illustre un tronçon de colonne pouvant être transporté selon le procédé de l'invention.

Un tronçon de colonne 1 à protéger des agressions extérieures comprend une virole cylindrique 2 contenant trois modules de plateaux ou de garnissages structurés 3,4,5. Une tubulure d'entrée ou de sortie 6 pénètre à travers la virole entre les modules 3 et 4. Cette tubulure est fermée par une bride pleine 7 assurant l'étanchéité de celle-ci.

Pendant le transport du tronçon, les deux ouvertures de la virole sont fermées par des disques de tôle mince 8, 9 qui assurent l'étanchéité du tronçon sans présenter pour autant de la résistance mécanique.

Un circuit 10 met en communication l'atmosphère Interne du tronçon 1 et l'atmosphère extérieur via un épurateur 11.

L'épurateur 11 comprend une ouverture 12 permettant des échanges gazeux avec l'atmosphère et contient un matériau 13 destiné à piéger les impuretés atmosphériques.

On va illustrer le fonctionnement de l'ensemble en prenant un exemple - non limitatif - relatif à l'arrêt de l'humidité atmosphérique pendant une période de stockage d'un tronçon de colonne, les flux entrant et sortant étant alors directement liés aux variations de température diurne et nocturne.

Dans l'hypothèse d'un tronçon de colonne de diamètre 4 m et de longueur 8 m, le volume interne isolé de façon étanche de l'extérieur(sauf à travers la tuyauterie d'équilibrage des pressions) est d'environ 100 m³. En supposant un écart de température entre la nuit et le jour de 20°C, les quantités d'air entrant puis sortant du volume sont de l'ordre de 7 à 8 Nm³.

En supposant une humidité relative moyenne de l'ordre de 60 ou 70%, la quantité de vapeur d'eau pouvant entrer dans l'équipement chaque cycle est d'une centaine de grammes. Cette quantité est suffisamment importante pour provoquer à terme des corrosions, empoisonner des catalyseurs, entretenir des réactions chimiques indésirables mais elle est par contre suffisamment faible pour être arrêtée même totalement sur un adsorbant du type alumine ou gel de silice. Quelques kilogrammes d'adsorbants permettent de retenir sans problème cette quantité d'eau et de sécher le gaz pénétrant dans l'équipement.

Le phénomène intéressant est que le gaz humide passe sur l'adsorbant quand la température se refroidit, ce qui est favorable à l'adsorption, c'est à dire dans ce cas à l'arrêt de l'eau. A l'inverse, le gaz sec circule de l'équipement vers le milieu extérieur alors que la température se réchauffe, ce qui est favorable à la désorption, c'est à dire à la régénération de l'adsorbant.

En particulier, si on installe le piège contenant l'adsorbant à l'extérieur de l'équipement, la température de l'adsorbant suivra rapidement les variations de température extérieure, se réchauffant plus rapidement que la partie intérieure de l'équipement dont la capacité calorifique est plus importante. Cela signifie qu'à la fin de chaque cycle journalier, l'adsorbant sera bien régénéré car il aura vu passer en régénération la même quantité de gaz qu'en adsorption à une température plus élevée. Les quelques kilogrammes d'adsorbant mentionné plus haut seront donc suffisant quelle que soit la durée du stockage ou du transport.

On constate également que les effets de pression (variation de la pression barométrique, altitude variable) sont favorables à la régénération de l'adsorbant : l'air humide entre lorsque la pression s'élève et sort quand la pression s'abaisse...c'est en quelque sorte, le principe même des procédés PSA.

Il est possible d'installer en série plusieurs lits d'adsorbants variés suivant les composés que l'on veut retenir. On peut imaginer installer quelques kilogrammes d'alumine activée, et quelques centaines de grammes de tamis échangé au baryum ou de zéolite spécifique, de charbon dopé pour arrêter, en plus de l'humidité atmosphérique, par exemple des traces d'HCl (piégeage chimique sur alumine), de NH₃, d'hydrocarbures...

Les adsorbants peuvent être placés dans un tronçon de tuyauterie de 10 cm de diamètre par exemple, maintenu entre deux grilles ou dans des boîtes ou enveloppes de forme variée.

De façon préférentielle, on fera en sorte que l'axe principal du piège soit vertical afin que la circulation de l'air à travers les adsorbants se fasse sans conduite pour court-circuiter le piège. Si deux positions sont prévues pour l'équipement, par exemple debout pour le stockage et couché pour le transport, la forme du piège sera adaptée pour être efficace dans les deux positions, ou deux positions de fixation seront prévues dès la conception.

## Revendications

1. Procédé de transport d'un tronçon de colonne de distillation (1) comprenant des parties internes (3, 4, 5) disposées dans une enceinte (2, 8, 9) dans lequel l'enceinte est fermée temporairement par au moins un fond de protection (8, 9), les parties internes étant reliées à l'atmosphère à l'extérieur de l'enceinte essentiellement au moyen d'une seule conduite (6) permettant le passage d'air de l'extérieur vers les parties internes et des parties internes vers l'extérieur et la conduite contenant au moins un dispositif (11) permettant de piéger au moins un constituant atmosphérique indésirable, le dispositif (11) contenant un adsorbant du type zéolite, alumine activée, gel de silice ou charbon actif éventuellement dopé par des additifs.

2. Procédé selon la revendication 1 dans lequel le(s) dispositif(s) (11) piègent un constituant compris dans le groupe suivant : eau, dioxyde de carbone, oxydes d'azote, acides, oxygène, produits alcalins, hydrocarbures.

3. Procédé selon la revendication 1 ou 2 dans lequel la conduite (6) est une tuyauterie de l'équipement.

4. Procédé selon la revendication 3 dans lequel l'axe principal du dispositif (11) en usage est vertical.

5. Procédé selon l'une des revendications précédentes dans lequel le dispositif (11) piège le constituant par réaction chimique et/ou piège physiquement le constituant.

## Claims

1. Method for transporting a distillation column portion (1) comprising internal components (3, 4, 5) arranged in a chamber (2, 8, 9), wherein the chamber is temporarily closed by at least one protective end (8, 9), the internal components being connected to the atmosphere outside the chamber essentially by means of a single line (6) allowing the passage of air from the outside towards the internal components and from the internal components towards the outside, and the line containing at least one device (11) for trapping at least one undesirable atmospheric constituent, the device (11) containing an adsorbent such as zeolite, activated alumina, silica gel or active carbon optionally doped with additives.

2. Method according to claim 1, wherein the device(s) (11) trap(s) a constituent included in the following group: water, carbon dioxide, nitrogen oxides, acids, oxygen, alkalis, hydrocarbons.

3. Method according to either claim 1 or claim 2, wherein the line (6) is a pipe of the equipment.

4. Method according to claim 3, wherein the principal axis of the device (11) in operation is vertical.

5. Method according to any of the preceding claims, wherein the device (11) traps the constituent by chemical reaction and/or physically traps the constituent.

## Patentansprüche

1. Verfahren zum Transport eines Abschnitts einer Destillationskolonne (1), umfassend innen liegende Teile (3, 4, 5), die in einem Raum (2, 8, 9) angeordnet sind, wobei der Raum vorübergehend durch mindestens einen Schutzboden (8, 9) geschlossen ist, wobei die innen liegenden Teile mit der Atmosphäre außerhalb des Raumes im Wesentlichen mit Hilfe einer einzigen Leitung (6) verbunden sind, die den Durchlass von Luft von außen in Richtung der innen liegenden Teile und von den innen liegenden Teilen nach außen ermöglicht, und wobei die Leitung mindestens eine Vorrichtung (11) umfasst, mit der sich mindestens ein unerwünschter atmosphärischer Bestandteil einfangen lässt, wobei die Vorrichtung (11) einen Absorber vom Typ Zeolith, aktiviertes Aluminium, Kieselgel oder aktiver Kohlenstoff, der gegebenenfalls mit Zusatzstoffen dotiert ist, enthält.

2. Vorrichtung nach Anspruch 1, wobei die Vorrichtung(en) (11) einen Bestandteil einfangen, der in der folgenden Gruppe enthalten ist: Wasser, Kohlendioxid, Stickstoffoxide, Säuren, Sauerstoff, alkalische Produkte, Kohlenwasserstoffe.

3. Vorrichtung nach Anspruch 1 oder 2, wobei die Leitung (6) eine Rohrleitung der Einrichtung ist.

4. Vorrichtung nach Anspruch 3, wobei die Hauptachse der Vorrichtung (11) bei Verwendung vertikal ist.

5. Verfahren nach einem der vorhergehenden Ansprüche, wobei die Vorrichtung (11) den Bestandteil durch chemische Reaktion einfängt und/oder den Bestandteil physikalisch einfängt.
